# EUROPÄISCHE PATENTSCHRIFT

(11) **EP 2 113 450 B1**
(45) Veröffentlichungstag und Bekanntmachung des Hinweises auf die Patenterteilung: **18.01.2012**
(21) Anmeldenummer: 09002500.8
(22) Anmeldetag: 21.02.2009
(51) Int. Cl.: B62D 65/18, B62D 65/04

(54) **Fertigungslinie zur Herstellung von Kraftfahrzeugen**
Production line for motor vehicles
Ligne de production de véhicules automobiles

(30) Priorität: 30.04.2008 DE 102008022442
(43) Veröffentlichungstag der Anmeldung: 04.11.2009
(73) Patentinhaber: Dr. Ing. h.c. F. Porsche AG, 70435 Stuttgart (DE)
(72) Erfinder: Krüger, Detlef, 04229 Leipzig (DE); Birnstiel, Michael, 04277 Leipzig (DE); Maschmeier, Horst, 32289 Rödinghausen (DE)

(56) Entgegenhaltungen:
- EP-A2- 1 293 419
- WO-A1-2008/135683
- DE-A1-102007 014 850
- DE-U1-202007 005 034
- DE-U1-202007 009 334
- JP-A- 59 023 781
- US-A1- 2004 206 605

## Beschreibung

Die Erfindung betrifft eine Fertigungslinie zur Herstellung von Kraftfahrzeugen.

Aus dem Serienfahrzeugbau ist es bekannt, Fahrzeuge unterschiedlicher Modellreihen auf ein und der selben Fertigungslinie zu fertigen bzw. zusammenzuführen. Innerhalb der Fertigungslinie werden in der Regel unterschiedliche Fördermittel eingesetzt. So ist es üblich, Karossen auf Gestellen, Schubplatten oder Hängewagen zu transportieren. Die Auswahl des jeweiligen Fördermittels hängt von den Arbeiten ab, die an den einzelnen Arbeitsstationen jeweils an der Karosse vorgenommen werden sollen. So werden beispielsweise Hängewagen eingesetzt, wenn Arbeiten unter der Karosse durchgeführt werden; es werden Schubplatten eingesetzt, um beispielsweise Arbeiten im Innenraum durchzuführen. Gestelle werden häufig eingesetzt, wenn Karossen von einer Arbeitsstation zu einer anderen Arbeitsstation längere Strecken überbrückt werden sollen.

Beim Fertigen von Fahrzeugen unterschiedlicher Modellreihen kann es vorkommen, dass sich diese in der Bodenstruktur und damit in den Aufnahmepunkten für die Fördermittel unterscheiden. Um die unterschiedlichen Aufnahmepunkte auszugleichen, werden Adapter zwischen der Karosse und dem Fördermittel angeordnet.

Dokument WO 2008/135683, welches den Oberbegriff von Anspruch 1 zeigt, beschreibt solch eine Fertigungslinie.

Die Aufgabe der Erfindung besteht darin, eine Fertigungslinie zur Herstellung von Kraftfahrzeugen zu schaffen, mit der es möglich ist, dass die Adapter nach ihrem Einsatz an der Karosse mit wenig Aufwand wieder einer erneuten Verwendung zugeführt werden können.

Die Aufgabe wird erfindungsgemäß mit den Merkmalen des Patentanspruch 1. gelöst.

Vorteilhafte Ausgestaltungen ergeben sich aus den Merkmalen der abhängigen Ansprüche.

Der Kern der Erfindung liegt darin, den Adapter, der - wenn das Fahrzeug am Ende der Fertigungslinie auf seine Räder gestellt wird - an dem letzten Fördermittel der Fertigungslinie, beispielsweise an dem Hängewagen, verbleibt, an einer Rückführstation auf ein leergeräumtes Fördermittel umzusetzen, auf das an der Startstation eine in die Fertigungslinie einzuspeisende Karosse gesetzt werden soll. Damit kann eine Rückführstrecke, die ohnehin für das Fördermittel vorgesehen sein muss, welches an der Startstation zuerst die Karosse aufnimmt, gleichzeitig für die Rückführung der Adapter genutzt werden. Bei der erfindungsgemäßen Fertigungslinie werden demzufolge Karossen an einer Startstation, insbesondere an einer Entladestation, auf das erste Fördermittel gesetzt. Dabei ist zwischen Karosse und Fördermittel ein Adapter vorgesehen, der nahezu während des gesamten Fertigungsprozesses an der Karosse verbleibt. Am Ende der Fertigungslinie, wenn das nahezu vollständig fertige Kraftfahrzeug auf seine Räder gestellt wird, verbleiben die Adapter auf dem letzten Fördermittel und werden an einer geeigneten Stelle, an der sich das letzte Fördermittel und das erste Fördermittel ohnehin kreuzen, auf das erste freigeräumte Fördermittel umgesetzt. Auf diesem wird der Adapter bis zur Startstation rückgeführt. Es ist damit kein separater Kreislauf für die Adapter zur Startstation nötig. Im Rahmen der Erfindung ist auch zu verstehen, dass das als erstes Fördermittel bezeichnete Fördermittel nicht nur an der Startstation eingesetzt sein muss. Es ist denkbar, dass ein baugleiches Fördermittel an anderer Stelle, beispielsweise in einem Zwischenlager, eingesetzt wird. In diesem Fall kann es vorteilhaft sein, den Adapter auf das baugleiche Fördermittel an einer Rückführstation zu übergeben, an der sich das letzte Fördermittel mit dem baugleichen Fördermittel kreuzt. Wichtig ist lediglich, dass der Adapter auf ein Fördermittel übergeben wird, dass auch an der Startstation eingesetzt wird, so dass ein geschlossener Kreislauf für den Adapter entsteht.

Es kann vorgesehen sein, dass zwischen dem ersten Fördermittel und dem letzten Fördermittel weitere Fördermittel vorgesehen sind, auf die die Karosse zusammen mit dem Adapter umgesetzt wird. Dabei können Fördermittel vorgesehen sein, die baugleich mit dem ersten Fördermittel sind und damit auch an der Startstation eingesetzt werden können.

In einer bevorzugten Ausgestaltungsform der Erfindung kann das erste Fördermittel ein Gestell sein, dass auf einer Förderstrecke zur Entladestation zurückgeführt wird. Unter Entladestation wird im Sinne der Erfindung eine Station verstanden, bei der an einem örtlich entfernten Produktionsstandort vorgefertigte Karossen von Transportmitteln entladen und in die Fertigungslinie eingeschleust werden.

Die Fertigungslinie umfasst ein Entkopplungsmodul, in dem Karossen in die gewünschte Montagereihenfolge gebracht werden. In dem Entkopplungsmodul werden zum Transport von Karossen Gestelle verwendet, die auch an der Entladestation verwendet werden. Vorzugsweise erstreckt sich die Förderstrecke von der Rückführstation über das Entkopplungsmodul bis zur Entladestation. Dadurch können beispielsweise in dem Entkopplungsmodul leergeräumte Gestelle über die Förderstrecke zur Entladestation zurückgeführt werden.

In einer bevorzugten Ausgestaltung kann das letzte Fördermittel ein Hängewagen sein, der von einer Elektrohängebahn gefördert wird. Mit einer Elektrohängebahn lassen sich insbesondere Arbeitsschritte der Endmontage, wie beispielsweise die sogenannte Hochzeit, durchführen.

Die Karossen können auf einem Gestell, das aus dem Entkopplungsmodul in Richtung Endmontage gefördert wird, an einer Übergabestation auf den Hängewagen übergeben werden. Die Übergabestation ist der der Rückführstation vorgeschaltet, wobei das leergeräumte Gestell zur Rückführstation gefördert wird.

Weitere vorteilhafte Ausgestaltungen der Erfindung werden im folgenden anhand der Zeichnung erläutert. Dabei zeigen:
- Figur 1: einen schematischen Ablauf einer Fertigungslinie,
- Figur 2: eine räumliche Anordnung der Fertigungslinie,
- Figur 3: ein Entkopplungsmodul der Fertigungslinie,
- Figur 4: eine Vorlaufstrecke der Fertigungslinie,
- Figur 5: Umsetzen eines Adapters von einem Hängewagen einer Elektrohängebahn auf eine Schubplatte in einer ersten Position,
- Figur 6: Umsetzen des Adapters vom Hängewagen auf die Schubplatte gemäß Figur 1 in einer zweiten Position,
- Figur 7: Umsetzen des Adapters vom Hängewagen auf die Schubplatte gemäß Figur 1 in einer dritten Position,
- Figur 8: Umsetzen des Adapters vom Hängewagen auf die Schubplatte gemäß Figur 1 in einer vierten Position,
- Figur 9: Umsetzen des Adapters vom Hängewagen auf die Schubplatte gemäß Figur 1 in einer fünften Position,

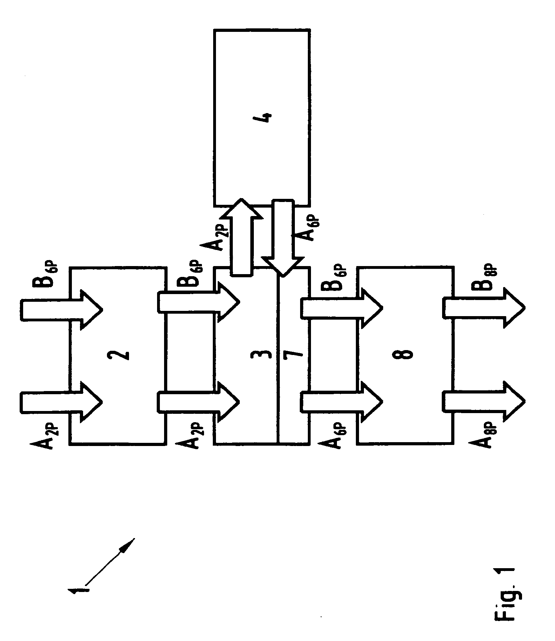

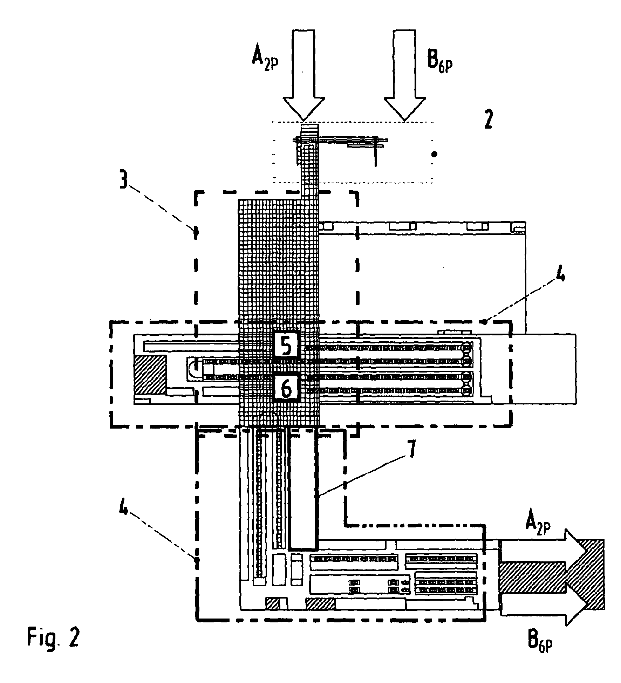

Figur 1 zeigt einen schematischen Ablauf einer Fertigungslinie 1 zur Fertigung von Personenwagen A und B auf ein und derselben Fertigungslinie. Die Bezugszeichen A und B stellen dabei Personenwagen zweier unterschiedlicher Modellreihen dar. Aus Figur 2 geht eine denkbare räumliche Anordnung der Fertigungslinie 1 hervor.

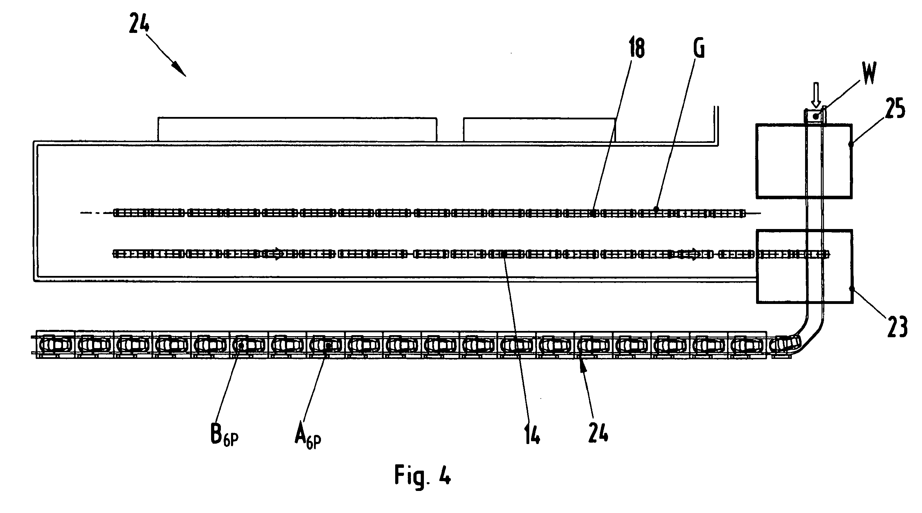

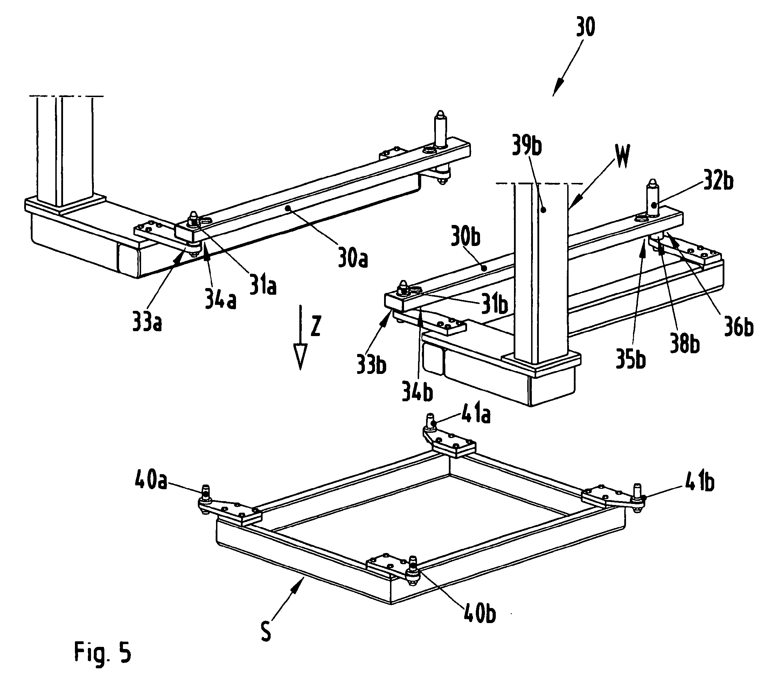

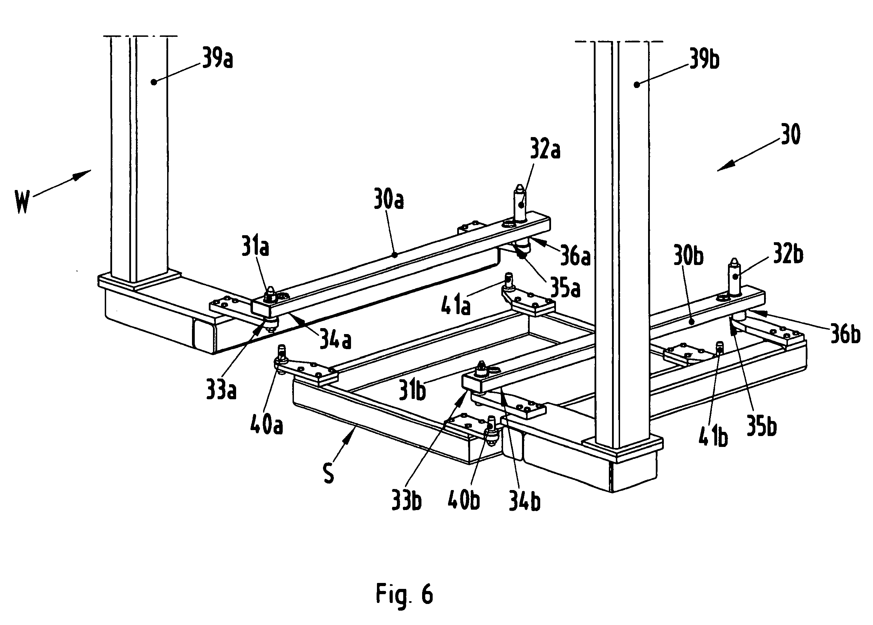

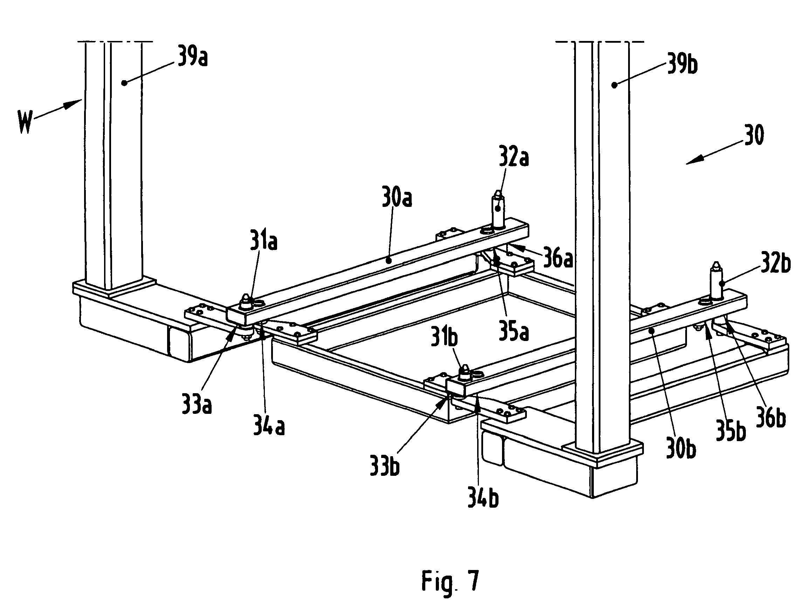

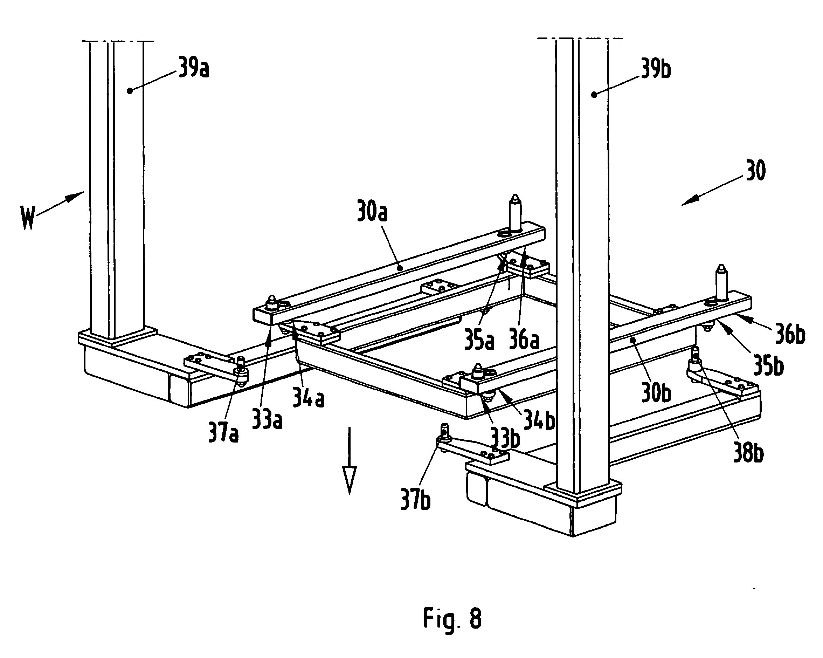

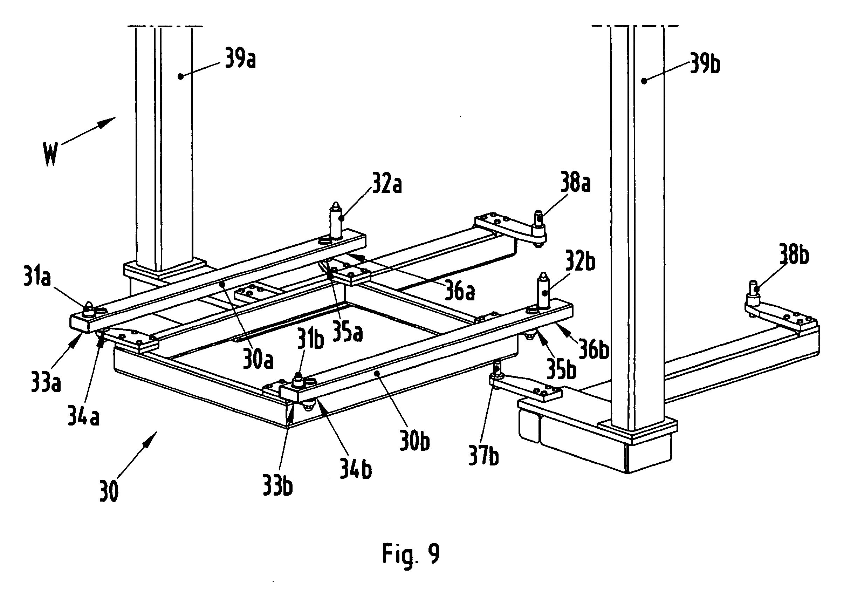

Die Fertigung ist dadurch gekennzeichnet, dass die Personenwagen bis zu einem definierten Bauzustand an einem räumlich entfernten Produktionsstandort vorgefertigt und per Transportmittel, vorzugsweise per Bahn, in einer geplanten Transportreihenfolge an einer Entladestation 2 der Fertigungslinie 1 angeliefert werden. Dabei ist es vorgesehen, dass die Personenwagen A in einem sogenannten Bauzustand 2P, also als lackierte Karosse A_{2P}, von einem ersten Produktionsstandort und die Personenwagen B in einem sogenannten Bauzustand 6P, also als Karosse mit Innenausstattung B_{6P}, von einem zweiten Produktionsstandort angeliefert werden. Die Entladestation 2 entlädt abwechselnd die Transportmittel, die entweder mit Karossen A_{2P} oder mit Karossen B_{6P} beladen sind, und setzt jede Karosse A_{2P} bzw. B_{6P} auf ein eigenes Gestell, einen sogenannten Skid. Dabei ist vorgesehen, dass jede Karosse A_{2P} und B_{6P} über einen Adapter auf dem Gestell G befestigt. Auf den Adapter wird in den Figuren 1 bis 4 nicht näher eingegangen. Dessen Aufbau und Funktionsweise wird anhand der Figuren 5 bis 9 erläutert.

Nach der Entladestation 2 wird jedes Gestell mit dem Adapter und einer Karosse A_{2P} bzw. B_{6P} über einen Vertikalförderer auf einer entsprechenden Fördertechnik in ein Entkopplungsmodul 3 transportiert.

Im Entkopplungsmodul 3 werden die Karossen A_{2P} in eine Montagelinie 4 eingespeist, die im wesentlichen quer zum Entkopplungsmodul 3 und in einer anderen Ebene angeordnet ist. In der Montagelinie 4 werden in der die Karossen A_{2P} auf die Baustufe 6P gebracht. Für die Arbeiten innerhalb der Montagelinie 4 ist es notwendig, dass die Karossen A wahlweise auf Schubplatten und Elektrohängebahnen transportiert werden. Daher werden die Karossen A_{2P} zusammen mit ihrem jeweiligen Adapter bei Übergabe an die Montagelinie 4 von ihrem Gestell auf eine Schubplatte umgesetzt und mit einem ersten Vertikalförderer 5 in die andere Ebene abgesenkt. Bei Übergabe der vervollständigten Karossen A_{6P} aus der Montagelinie 4 zurück in das Entkopplungsmodul 3 werden diese zusammen mit ihrem Adapter von ihrer Schubplatte auf ein leeres Gestell umgesetzt und über einen zweiten Vertikalförderer 6 in die Ebene des Entkopplungsmoduls 3 angehoben, so dass Karossen A_{6P} die Montagelinie 4 in Richtung Entkopplungsmodul 3 verlassen.

Von dem Entkopplungsmodul 3 werden die Karossen A_{6P} und B_{6P} sequenziert, d.h. in einer geplanten Ausbringungsreihenfolge in eine Vorlaufstrecke 7 übergeben. Hier findet die Übergabe der auf dem Gestell abgestellten Karossen A_{6P} und B_{6P} wiederum zusammen mit dem Adapter auf die in der Endmontage 8 genutzten Elektrohängebahnen statt.

In der Endmontage 8 werden die Karossen A_{6P} und B_{6P} in ihre Baustufe 8P gebracht und verlassen als Karossen A_{8P} und B_{8P} die Fertigungslinie 1, wobei hierfür die Adapter von dem jeweiligen Personenwagen A bzw. B entfernt sein müssen.

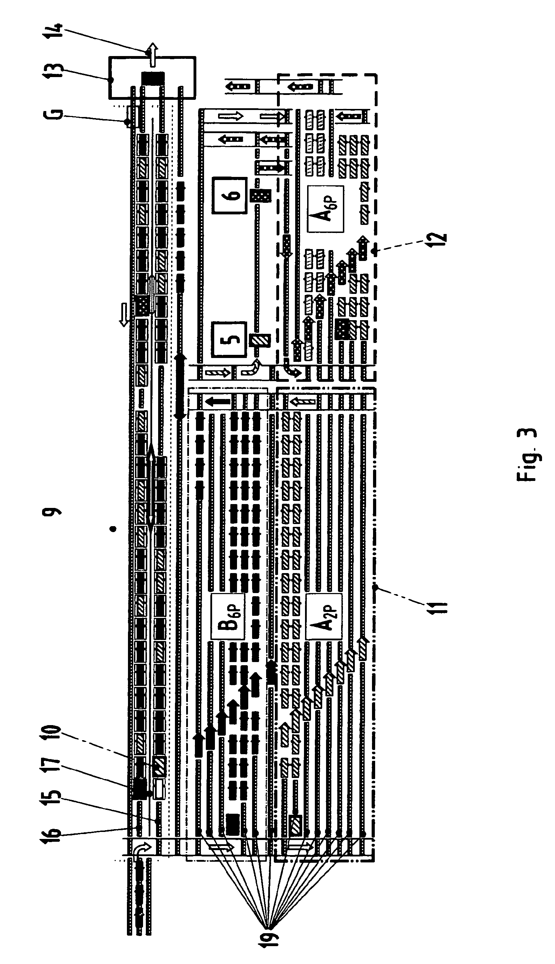

Aus Figur 3 geht das Entkopplungsmodul 3 hervor. Die Karossen A_{2P} sind dabei schräg schraffiert, die Karossen A_{6P} grau hinterlegt und die Karossen B_{6P} schwarz ausgefüllt dargestellt. Das Enkopplungsmodul 3 umfasst einen wahlfreien Speicher 9, der geeignet ist, Gestelle mit Karossen jeglicher Art (A_{2P}, A_{6P}, B_{6P}) aufzunehmen. Ferner ist ein Gassenspeicher 10 für Karossen B_{6P}, ein Gassenspeicher 11 für Karossen A_{2P} und ein Gassenspeicher 12 für Karossen A_{6P} vorgesehen. Die mit Bezugsziffer 13 bezeichnete Station dient zur Sequenzierung und zur Übergabe der Karossen A_{6P} und B_{6P} in die Vorlaufstrecke 7. D. h., hier werden die Karossen A_{6P} und B_{6P} in der Reihenfolge auf eine Förderstrecke 14 eingemischt, in der sie in der Endmontage 8 gefertigt werden sollen.

In dem wahlfreien Speicher 9 können die auf ihren Gestellen G gelagerten Karossen von jeder beliebigen Position auf zwei außenseitigen Schienen 15 und 16 auf eine mittlere Schiene 17 übersetzt und auf dieser hin- und her bewegt werden. So können die Gestelle G mit den Karossen beispielsweise direkt zur Sequenzierstation 13 oder zum Vertikalförderer 5 gefördert werden. D.h., auf jede der Karossen im wahlfreien Speicher 9 kann nach Bedarf zugegriffen werden, damit diese an eine beliebige Stelle in den Prozess eingeschleust wird.

Parallel hinter den Schienen 15, 16 und 17 des wahlfreien Speichers 9 verläuft eine Förderstrecke 18 zum Transport von mit Adaptern bestückten Gestellen G zurück zur Entladestation 2, wo sie jeweils erneut mit einer neu angekommenen Karosse bestückt werden können.

Der Gassenspeicher 10 ist mit sechs Speichergassen 19 versehen, in denen Karossen B_{6P} hintereinander in der Reihenfolge gelagert sind, in der sie planmäßig in die Endmontage 8 eingeschleust werden sollen. Der Gassenspeicher 11 nimmt die Karossen A_{2P} auf insgesamt neun Speichergassen 19 in der Reihenfolge auf, in der diese in die Montagelinie 4 eingeschleust werden sollen. Die Reihenfolge der Karossen A_{6P} in den acht Speichergassen 19 des Gassenspeichers 12 richtet sich wiederum nach der Reihenfolge mit der die Karossen in der Endmontage 8 mit den Karossen B_{6P} eingemischt werden sollen. Die in die Speichergassen 19 eingezeichneten Pfeile zeigen die vorgesehene Förderrichtung an.

Die Gassenspeicher 10, 11, 12, der wahlfreie Speicher 9 sowie die Sequenzierstation 13 sind durch quer verlaufende Förderstrecken 20 untereinander verbunden. Die in die Förderstrecken 20 eingezeichneten Pfeile zeigen die zulässige Transportrichtung.

Hinter der äußersten Speichergasse 18 des Gassenspeichers 10 ist eine Bypassförderstrecke 21 vorgesehen, auf der Karossen B_{6P} direkt von der Entladestation 2 in der gelieferten Reihenfolge zur Sequenzierstation 13 gefördert werden können.

Zwischen dem Gassenspeicher 12 und dem wahlfreien Speicher 9 sind die beiden Vertikalförderer 5 und 6 angeordnet, mit denen die Karossen A_{2P} vom Gassenspeicher 11 in die Montagelinie 4 ein- und von der Montagelinie 4 in den Gassenspeicher 12 als zugefertigte Karossen A_{6P} wieder ausgeschleust werden. Aus dem Gassenspeicher 12 gelangen die Karossen A_{6P} gemäß den eingezeichneten Pfeilen zur Sequenzierstation 13.

Mit dem dargestellten Entkopplungsmodul 3 lässt sich an der Sequenzierstation 13 aus den ankommenden Umfängen genau die Reihenfolge zusammenstellen, die bei der gemischten Fertigung der Karossen A_{6P} und B_{6P} in der Endmontage 8 benötigt wird.

Das Entkopplungsmodul 3 ist über die Sequenzierstation 13 mit der Vorlaufstrecke 7 verbunden. Die in der geplanten Ausbringungsreihenfolge auf einer an die Förderstrecke 14 anschließende Förderstrecke 22 geförderten Karossen A_{6P} und B_{6P} werden an einer Übergabestation 23 von ihrem jeweiligen Gestell G zusammen mit ihrem Adapter an einen Hängewagen W einer Elektrohängebahn 24 übergeben.

Unmittelbar neben der Übergabestation 23 ist eine Rückführstation 25 angeordnet. Von der Übergabestation 23 wird das gerade freigewordene Gestell G an die Rückführstation 25 übergeben. Dort wird von einem in der Endmontage 8 leergeräumten Hängewagen W, der nunmehr nur noch den Adapter des inzwischen auf seine in der Endmontage 8 eingebauten Räder gestellten Fahrzeugs trägt, der Adapter automatisch auf das freigewordene Gestell G übergeben. Dieses fährt dann zusammen mit dem darauf abgelegten Adapter auf der Förderstrecke 18 bis zur Entladestation 2 zurück. Die neu ankommenden Karossen A_{2P} bzw. B_{6P} werden in der Entladestation 2 unter Zwischenschaltung des Adapters auf die Gestelle G abgestellt.

Die Karossen A bzw. B werden also während des gesamten Fertigungsprozesses zusammen mit dem Adapter innerhalb der Fertigungslinie 1 transportiert, gefördert und übergeben bis das Fahrzeug von dem Hängewagen W auf seine Räder abgestellt wird. Hier verbleibt der Adapter solange am Hängewagen W bis dieser zur Rückführstation 25 gelangt. Durch das Übergeben des Adapters auf das soeben freigewordene Gestell G ist der Hängewagen W frei, eine Karosse A_{6P} oder B_{6P} mit dem jeweiligen Adapter zu übernehmen.

Der Aufbau und die Funktionsweise des Adapters wird im folgenden anhand der Figuren 5 bis 9 näher erläutert.

Da sich die Personenwagen A und B in ihrer Bodenanlage unterscheiden können, was sich insbesondere für die Position der Aufnahmepunkte auswirken kann, ist ein Adapter 30 vorgesehen, der über den gesamten Fertigungsprozess bis zu dem Punkt an den Karossen A bzw. B verbleibt, bis diese auf ihre Räder gestellt werden.

Der Adapter 30 umfasst zwei spiegelsymmetrisch zueinander ausgerichteten Adapterhälften 30a und 30b. Diese weisen an ihrer Oberseite jeweils zwei Dorne 31a und 32a bzw. 31b und 32b auf. Die Position der Dorne 31a, 31b und 32a, 32b richtet sich nach den Aufnahmepunkten an der Bodenanlage des Personenwagens A. Es kann vorgesehen sein, dass die Dorne 31a, 31b und 32a, 32b exzentrisch ausgebildet sind, wobei durch Verdrehen der Dorne 31 und 32 um ihre Längsachse eine Verriegelung an den Aufnahmepunkten erfolgt. Dieses Verdrehen kann automatisch erfolgen. Der Vorteil dieser Verriegelung liegt darin, dass die Karosse A in einem Hängewagen W zusätzlich um die Fahrzeuglängsachse verdreht werden kann, ohne dass ein Herausfallen möglich ist.

An seiner Unterseite ist jede Adapterhälfte 30a, 30b vorne mit jeweils zwei Eingriffsöffnungen 33a, 33b und 34a, 34b sowie hinten mit jeweils zwei Eingriffsöffnungen 35a, 35b und 36a, 36b versehen. Die Position dieser Eingriffsöffnungen richtet sich nach den eingreifenden Zapfen der jeweiligen Fördertechnik.

In dem dargestellten Ausführungsbeispiel sind die Eingriffsöffnungen 33a, 33b, 36a sowie 36b entsprechend der Zapfen 37a, 37b, 38a und 38b eines Hängewagens W, von dem lediglich die beiden Greifarme 39a und 39b dargestellt sind, der nicht näher dargestellten Elektrohängebahn angeordnet.

Die Eingriffsöffnungen 34a, 34b, 35a sowie 35b sind entsprechend der Zapfen 40a, 40b, 41a und 41b einer Schubplatte S an der Unterseite der Adapterhälften 30a und 30b positioniert.

Die Adapter für die Karossen B sind in dem beschriebenen Ausführungsbeispiel identisch mit den Adaptern 30 für die Karossen A, da die Aufnahmepunkte an den Karossen A und B identisch sind. Es ist jedoch auch denkbar, dass sich die Aufnahmepunkte der Karossen A von denen der Karosse B unterscheiden. In diesem Fall unterscheiden sich die Adapterhälften 30a und 30b lediglich dadurch, dass die Dorne für die Aufnahmepunkte entsprechend der Bodenanlage positioniert sind. Die Eingriffsöffnungen 33, 34, 35 und 36 für die Fördertechnik bleiben an der gleichen Position, so dass die Zapfen der Fördertechnik unabhängig von der jeweils aufgenommenen Karosse immer an der gleichen Position sind. Das hat den Vorteil, dass Karossen unterschiedlicher Modellreihen, d.h. mit unterschiedlichen Aufnahmepunkten an der Bodenanlage auf einer gemeinsamen Fertigungslinie 1 transportiert werden können. Außerdem kann durch die beiden vorderen Eingriffsöffnungen 33 und 34 sowie die beiden hinteren Eingriffsöffnungen 35 und 36 die Karosse von einer auf die andere Fördertechnik übergeben werden, ohne dass aufwendige Umsetzprozesse oder Umgreifprozeduren durchgeführt werden müssen.

Das vorteilhafte Umsetzen durch den Adapter 30 lässt sich am Beispiel eines Umsetzprozesses von einem Hängewagen einer Elektrohängebahn auf eine Schubplatte wie folgt zusammenfassen:

Der Hängewagen W wird in Pfeilrichtung Z auf die Schubplatte S abgesenkt und zwar so, dass sich die Zapfen 40a, 40b, 41a, 41b in Überdeckung mit den Eingriffsöffnungen 34a, 34b, 35a, 35b befindet. Sobald sich die Zapfen 40a, 40b, 41a, 41b in Eingriff mit den Eingriffsöffnungen 34a, 34b, 35a, 35b befinden, wird der Hängewagen noch soweit abgesenkt, dass sich die Zapfen 37a, 37b, 38a, 38b nicht mehr im Eingriff mit ihren korrespondierenden Eingriffsöffnungen 33a, 33b, 36a, 36b befinden. Die Schubplatte S kann mit dem aufgenommenen Adapter 30 respektive der nicht dargestellten Karosse A nunmehr gemäß Pfeilrichtung X nach vorne aus dem von den Greifarmen 39a, 39b aufgespannten Bereich weg bewegt werden.

Alternativ zu dem beschriebenen Umsetzen kann anstelle eines Absenkens des Hängewagens W die Schubplatte S entgegen Pfeilrichtung Z angehoben und der Hängewagen W in oder entgegen Pfeilrichtung X weg bewegt werden.

Ferner ist es nach dem gleichen Prinzip möglich, den Adapter 30 respektive die Karosse von der Schubplatte S auf einen Hängewagen W oder von dem Gestell G auf eine Schubplatte S und umgekehrt zu übergeben. Da der Adapter 30 immer vier freie Eingriffsöffnungen aufweist, auch wenn er von einer ersten Fördertechnik gehalten ist, kann die Karosse stets an eine zweite Fördertechnik übergeben werden, ohne dass die Karosse umgesetzt werden muss.

## Patentansprüche

1. Fertigungslinie zur Herstellung von Kraftfahrzeugen bei der eine Karosse (A_{2P}, B_{6P}) an einer Startstation, insbesondere an einer Entladestation (2), die Karosse (A_{2P}, B_{6P}) auf ein erstes Fördermittel, insbesondere auf ein Gestell (G), gesetzt wird, wobei zwischen Karosse und Fördermittel ein Adapter (30) vorgesehen ist, **dadurch gekennzeichnet**, daβ der Adapter am Ende der Fertigungslinie an dem freigeräumten letzten Fördermittel, insbesondere einem Hängewagen (W), verbleibt und an einer Rückführstation (25), an der sich das erste und das letzte Fördermittel kreuzen, auf das erste Fördermittel zur Rückführung an die Startstation umgesetzt wird.

2. Fertigungslinie nach Anspruch 1,
**dadurch gekennzeichnet,**
**dass** zwischen dem ersten Fördermittel und dem letzten Fördermittel weitere Fördermittel vorgesehen sind, auf die die Karosse (A_{2P}, A_{6P}, B_{6P}) zusammen mit dem Adapter umgesetzt wird.

3. Fertigungslinie nach Anspruch 1 oder 2,
**dadurch gekennzeichnet,**
**dass** das erste Fördermittel ein Gestell (G) ist, dass auf einer Förderstrecke (18) zur Entladestation (2) zurückgeführt wird.

4. Fertigungslinie nach Anspruch 3,
**dadurch gekennzeichnet,**
**dass** sich die Förderstrecke (18) von der Rückführstation (25) über ein Entkopplungsmodul (3) bis zur Startstation, insbesondere bis zur Entladestation (2), erstreckt.

5. Fertigungslinie nach einem der vorgenannten Ansprüche,
**dadurch gekennzeichnet,**
**dass** das letzte Fördermittel ein Hängewagen (W) ist, der von einer Elektrohängebahn (24) gefördert wird.

6. Fertigungslinie nach einem der vorgenannten Ansprüche,
**dadurch gekennzeichnet,**
**dass** der Rückführstation (25) eine Übergabestation (23) vorgeschaltet ist, bei der die Karosse von dem Gestell (G) auf den Hängewagen (W) übergeben wird, wobei das leergeräumte Gestell (G) zur Rückführstation (25) gefördert wird.

## Claims

1. Production line for the production of motor vehicles, in which a vehicle body (A_{2P}, B_{6P}) is placed onto a first conveying means, in particular onto a frame (G), at a starting station, in particular at an unloading station (2), wherein an adaptor (30) is provided between the vehicle body and conveying means, **characterized in that**, at the end of the production line, the adaptor remains on the cleared final conveying means, in particular a suspended carriage (W), and, at a return station (25), at which the first and the final conveying means intersect, is moved onto the first conveying means for returning to the starting station.

2. Production line according to Claim 1, **characterized in that** further conveying means onto which the vehicle body (A_{2P}, A_{6P}, B_{6P}) is moved together with the adaptor are provided between the first conveying means and the final conveying means.

3. Production line according to Claim 1 or 2, **characterized in that** the first conveying means is a frame (G) which is guided back to the unloading station (2) on a conveying section (18).

4. Production line according to Claim 3, **characterized in that** the conveying section (18) extends from the return station (25) via a decoupling module (3) as far as the start station, in particular as far as the unloading station (2).

5. Production line according to one of the preceding claims, **characterized in that** the final conveying means is a suspended carriage (W) which is conveyed by a telpher line (24).

6. Production line according to one of the preceding claims, **characterized in that** a transfer station (23) is connected upstream of the return station (25), at which transfer station (25) the vehicle body is transferred from the frame (G) onto the suspended carriage (W), and the emptied frame (G) is conveyed to the return station (25).

## Revendications

1. Ligne de production pour la fabrication de véhicules automobiles, dans laquelle une caisse (A_{2P}, B_{6P}) sur un poste de départ, notamment sur un poste de déchargement (2), est placée sur un premier moyen de transport, en particulier un bâti (G), un adaptateur (30) étant prévu entre la caisse et le moyen de transport, **caractérisée en ce que** l'adaptateur reste à la fin de la ligne de production sur le dernier moyen de transport libéré, en particulier un chariot suspendu (W), et est transféré, en un poste de retour (25) au niveau duquel se croisent le premier et le dernier moyen de transport, au premier moyen de transport en vue de son retour au poste de départ.

2. Ligne de production selon la revendication 1,
**caractérisée en ce**
**qu'**entre le premier moyen de transport et le dernier moyen de transport sont prévus d'autres moyens de transport sur lesquels la caisse (A_{2P}, A_{6P}, B_{6P}) est transférée avec l'adaptateur.

3. Ligne de production selon la revendication 1 ou 2,
**caractérisée en ce que**
le premier moyen de transport est un bâti (G) qui est ramené sur une voie de transport (18) jusqu'au poste de déchargement (2).

4. Ligne de production selon la revendication 3,
**caractérisée en ce que**
la voie de transport (18) s'étend depuis le poste de retour (25) par le biais d'un module de découplage (3) jusqu'au poste de départ, notamment jusqu'au poste de déchargement (2).

5. Ligne de production selon l'une quelconque des revendications précédentes,
**caractérisée en ce que**
le dernier moyen de transport est un chariot suspendu (W) qui est transporté par un convoyeur aérien électrique (24).

6. Ligne de production selon l'une quelconque des revendications précédentes,
**caractérisée en ce**
**qu'**un poste de transfert (23) est monté avant le poste de retour (25), au niveau duquel poste de transfert la caisse est transférée du bâti (G) au chariot suspendu (W), le bâti (G) devenu vide étant transporté au poste de retour (25).
